# DEMANDE DE BREVET EUROPEEN

(11) **EP 4 830 520 A1**
(43) Date de publication de la demande: **28.10.2026**
(21) Numéro de dépôt: 26170187.4
(22) Date de dépôt: 01.04.2026
(51) Int. Cl.: A01M 7/00, B05B 1/16

(54) **DISPOSITIF DE COMMANDE D'UN PORTE-BUSES MULTIPLE**

(30) Priorité: 24.04.2025 FR 2504348
(71) Demandeur: Exel Industries, 51200 Epernay (FR)
(72) Inventeur: PITAUD, Sylvain, 01990 CHANEINS (FR)
(74) Mandataire: Bandpay & Greuter

(57) **Abrégé**

La présente invention vise un dispositif de commande (2) pour commander au moins un porte-buses (1), le dispositif comprenant :
- un moteur électrique logé dans un carter (4) du dispositif de commande (2), le moteur électrique entrainant en rotation un élément de transmission configuré pour transmettre le mouvement de rotation à un actionneur du porte-buses (1) ;
- au moins un câble d'alimentation (10) configuré pour alimenter en énergie électrique le moteur par l'intermédiaire d'une carte électronique du dispositif de commande (2), la carte électronique étant logée dans le carter (4) ;
- un capteur d'orientation relié à la carte électronique, le capteur d'orientation étant configuré pour déterminer une orientation angulaire de l'élément de transmission du moteur ;
le dispositif étant configuré pour commander la rotation de l'actionneur du porte-buses (1) de sorte à rendre active au moins une buse de pulvérisation donnée du porte-buses (1).

## Description

### DOMAINE TECHNIQUE

La présente invention concerne le domaine de la pulvérisation agricole.

En particulier, l'invention concerne un système de motorisation d'un porte-buses multiples d'un système de pulvérisation agricole.

### ETAT DE LA TECHNIQUE

Une rampe de pulvérisation agricole comprend généralement des portes-buses répartis de manière uniforme sur toute la longueur de la rampe de pulvérisation, pour pulvériser du produit phytosanitaire sous forme liquide sur des rangs de végétaux. Pour améliorer l'efficacité de la pulvérisation de produit, il est nécessaire de faire varier le débit de pulvérisation des buses et de le piloter proportionnellement à la vitesse d'avancement de la machine agricole supportant la rampe de pulvérisation et / ou en fonction du produit pulvérisé par exemple. Pour répondre à cette problématique, il est connu des porte-buses supportant plusieurs buses, par exemple des buses différentes ou des buses ayant des débits différents.

Lorsqu'un utilisateur souhaite changer de buse, il doit effectuer une opération, généralement manuelle, pour tourner le porte-buses et ainsi rendre active une autre buse adaptée à une vitesse d'avancement de la machine agricole différente. Cette opération nécessite une interruption de la pulvérisation, au profit d'une opération de modification des buses actives sur chacun des portes buses. Il est ainsi connu des portes-buses comprenant une pluralité de buses pouvant être actives de manière simultanée, et présentant un débit identique ou non. Ces portes-buses sont généralement pilotables automatiquement par le biais d'un actionneur, le plus souvent pneumatique, permettant de sélectionner la ou les buses actives au moyen d'un dispositif de sélection des buses actives.

Le document FR3143268A1 décrit un exemple d'un porte-buses multiple, montable sur une rampe de pulvérisation d'un pulvérisateur agricole, permet l'utilisation d'une pluralité de buses différentes, permettant la pulvérisation de différents produits phytosanitaires, notamment à des débits différents.

L'invention vise à palier tout ou partie des inconvénients de l'état de la technique, en proposant un système de commande d'un tel porte-buses.

### PRESENTATION DE L'INVENTION

Plus précisément, l'invention a pour objet un Dispositif de commande pour commander au moins un porte-buses d'un pulvérisateur agricole, le dispositif comprenant :
- un moteur électrique logé dans un carter du dispositif de commande, le moteur électrique entrainant en rotation autour d'un premier axe de référence un élément de transmission configuré pour transmettre le mouvement de rotation à un actionneur du porte-buses ;
- au moins un câble d'alimentation configuré pour alimenter en énergie électrique le moteur par l'intermédiaire d'une carte électronique du dispositif de commande, la carte électronique étant logée dans le carter ;
- un capteur d'orientation relié à la carte électronique, le capteur d'orientation étant configuré pour déterminer une orientation angulaire de l'élément de transmission du moteur ;

Le dispositif de commande est configuré pour commander la rotation de l'actionneur du porte-buses par l'intermédiaire d'au moins une commande prédéterminée de sorte à rendre active au moins une buse de pulvérisation donnée du porte-buses, chaque commande prédéterminée étant associée à une orientation angulaire donnée de l'élément de transmission du moteur électrique.

Grâce à une telle combinaison de caractéristiques, un contrôle précis et automatique du porte-buses est réalisé, permettant finalement une sélection automatique et contrôlée des buses de pulvérisation, par exemple pour pulvériser un premier produit phytosanitaire donné à l'aide de l'une des buses du porte-buses et un deuxième produit phytosanitaire donné à l'aide d'une autre des buses du porte-buses. De la même manière, un tel dispositif de commande peut permettre de modifier le débit d'un pulvérisateur par exemple en modifiant la buse active. Ainsi, un opérateur d'un pulvérisateur, par exemple porté par un engin agricole, peut modifier la commande d'un porte-buses sans descendre dudit engin agricole. Il en résulte un gain de temps significatif et une amélioration de la sécurité de l'opérateur. Un tel dispositif muni d'un tel capteur permet d'obtenir un retour sur la buse active, permettant de signaler tout dysfonctionnement, par exemple un blocage mécanique du dispositif ou du mécanisme du porte-buses.

Avantageusement, l'élément de transmission est configuré pour transmettre le mouvement de rotation à l'actionneur autour d'un deuxième axe de référence, parallèle au premier axe de référence. Une telle configuration permet de déporter radialement l'axe de l'élément de transmission, notamment du pignon, et du moteur, par rapport à l'axe de l'actionneur, permettant par exemple de disposer le dispositif au-dessus du porte-buses par rapport au sol.

Avantageusement, le carter comprend un premier étage et un deuxième étage superposés, l'élément de transmission et le capteur d'orientation étant logé dans le premier étage du carter et le moteur électrique et la carte électronique étant logés dans le deuxième étage, le deuxième étage s'étendant au-dessus du premier étage. Dans une telle configuration, les composants électroniques et électriques sont séparés des composants mécaniques. En outre, une telle configuration contribue aussi à pouvoir disposer le dispositif au-dessus du porte-buses par rapport au sol.

Avantageusement, le carter comprend, au premier étage , au niveau de la liaison entre le carter et l'actionneur , une gorge en saillie autour de l'actionneur , ladite gorge présentant une forme, par exemple une chicane axiale, complémentaire avec celle de l'actionneur.

Avantageusement, le dispositif de commande comprend un réducteur logé dans le carter, le réducteur étant disposé entre l'élément de transmission du moteur électrique et l'actionneur du porte-buses. En outre, le réducteur peut s'étendre entre le premier étage et le deuxième étage.

Avantageusement, le câble d'alimentation s'étend au travers d'une paroi du carter, de sorte qu'une première partie du câble d'alimentation s'étende à l'intérieur du carter du dispositif de commande et une deuxième partie du câble d'alimentation s'étende à l'extérieur du carter du dispositif de commande, les deux parties du câble étant délimitées par un organe d'étanchéité du carter.

Avantageusement, l'organe d'étanchéité est formé par une résine de remplissage d'une chicane aménagée en entrée du carter, la première partie du câble d'alimentation s'étendant à travers la chicane. Dans une telle configuration, l'étanchéité est sensiblement améliorée, permettant de préserver les composants mécaniques et électroniques du dispositif.

Avantageusement, le dispositif de commande comprend deux câbles d'alimentation, chaque câble d'alimentation étant configuré pour relier la carte électronique du dispositif de commande à un dispositif de commande adjacent. Dans une telle configuration, les dispositifs adjacents peuvent être reliés en série, de sorte qu'une seule source d'énergie puisse alimenter une pluralité de dispositifs, ou qu'une même commande puisse être adressé à cette pluralité de dispositifs.

Avantageusement, le moteur électrique est un moteur électrique pas à pas.

Avantageusement, le capteur d'orientation est disposé en regard d'une roue dentée en engrènement avec l'élément de transmission, une cible étant disposée sur la roue dentée, ladite cible étant configurée pour être détectée par le capteur d'orientation. Dans une telle configuration, une lecture de l'orientation angulaire de la roue dentée de la cible, par exemple un aimant, par le capteur permet de déterminer avec précision une orientation angulaire correspondante du pignon.

Avantageusement, le dispositif de commande comprend des dispositifs de fixation configurés pour encliqueter ledit dispositif de commande sur une rampe de pulvérisation et pour le solidariser sur le porte-buses .

Selon un autre aspect de l'invention, celle-ci a trait à un système de commande comprenant une pluralité de dispositifs de commande tels que décrits ci-dessus, chaque dispositif de commande étant relié à au moins un autre dispositif de commande par l'intermédiaire de leurs câbles d'alimentation se joignant pour former des nœuds, les cartes électroniques des dispositifs de commande et les nœuds étant configurés pour former un réseau de communication, de préférence un réseau de communication CAN du système, le système de commande étant configuré pour commander une pluralité de porte-buses d'un pulvérisateur agricole.

Selon un autre aspect de l'invention, celle-ci a trait à un pulvérisateur agricole comprenant un système de commande selon tel que décrit ci-dessus et une rampe de pulvérisation , et dans lequel les dispositifs de commande sont montés sur la rampe de pulvérisation , verticalement au-dessus de ladite rampe de pulvérisation .

### PRESENTATION DES FIGURES

L'invention sera mieux comprise à la lecture de la description qui va suivre, donnée uniquement à titre d'exemple, et se référant aux dessins annexés donnés à titre d'exemples non limitatifs, dans lesquels des références identiques sont données à des objets semblables et sur lesquels :
La figure 1 est une représentation schématique en perspective isométrique d'un porte-buses et de son dispositif d'entrainement selon un premier mode de réalisation de l'invention ;
La figure 2 est une représentation schématique partielle en coupe du dispositif d'entrainement de la figure 1 ;
La figure 3 est une représentation schématique partielle en perspective isométrique du dispositif d'entrainement de la figure 1, dans une position retirée d'une partie de carter ;
La figure 4 est une représentation schématique partielle en vue de dessus du dispositif d'entrainement de la figure 1, dans une position retirée d'une autre partie de carter ;
La figure 5 est une représentation schématique partielle en vue de face du dispositif d'entrainement de la figure 1 ;
La figure 6 est une représentation schématique en vue de face d'un système comprenant une pluralité de dispositifs de commande selon un autre aspect de l'invention.

Il faut noter que les figures exposent l'invention de manière détaillée pour permettre de mettre en œuvre l'invention ; bien que non limitatives, lesdites figures servent notamment à mieux définir l'invention le cas échéant.

### DESCRIPTION DETAILLEE DE L'INVENTION

L'invention concerne notamment un dispositif de pulvérisation agricole, par exemple un pulvérisateur porté par un engin agricole. Un tel pulvérisateur comprend notamment une rampe de pulvérisation, munie d'une pluralité de porte-buses s'étendant sur toute sa longueur. De tels porte-buses sont notamment décrits dans le document FR3143268A1.

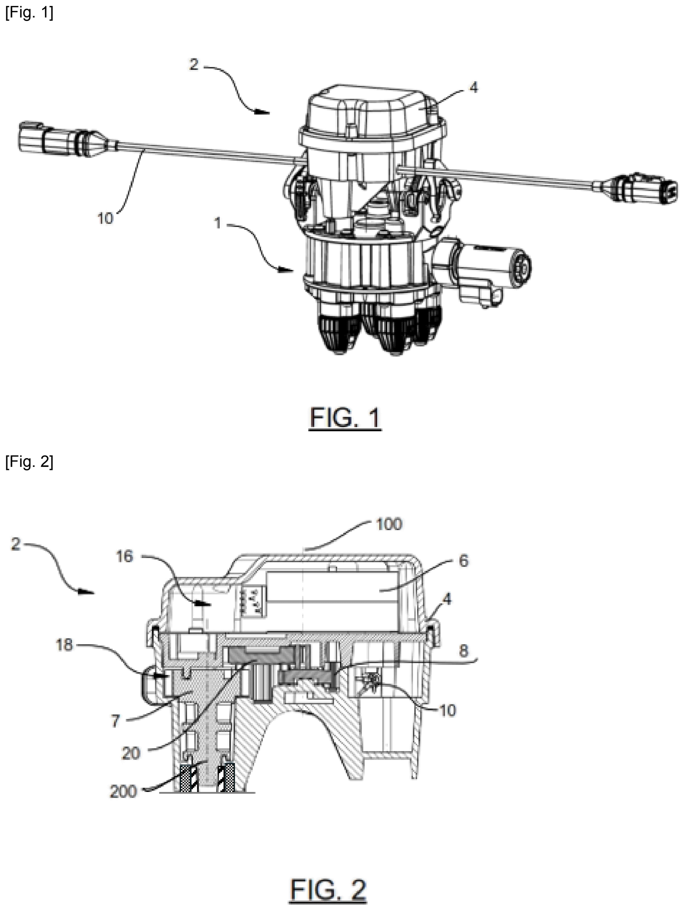

La figure 1 illustre, selon un premier aspect de l'invention, un porte-buses 1 tel que décrit ci-dessus. Au-dessus du porte-buses 1 par rapport au sol, c'est-à-dire dans une direction opposée à la direction de pulvérisation des buses du porte-buses 1 s'étend un dispositif de commande 2 associé audit porte-buses 1. Le dispositif de commande 2 illustré est configuré pour commander le porte-buses 1. Par le vocable « commander », on entend la possibilité pour un opérateur, à distance et sans intervention manuelle directe sur le porte-buses 1, de sélectionner la ou les buses actives du porte-buses.

Le dispositif de commande 2 comprend un carter 4 solidaire du corps du porte-buses 1, de préférence monté de manière amovible. Lorsque le porte-buses 1 et le dispositif de commande 2 sont montés sur une rampe de pulvérisation, le carter 4 du dispositif de commande 2 s'étend au-dessus de ladite rampe. Le carter 4 délimite un volume intérieur et est configuré pour recevoir des composants électroniques et mécaniques du dispositif de commande 2. Le carter 4 est enclipsé sur le corps du porte-buses 1, et est configuré pour être désolidarisé du porte-buses 1 sans outil.

Comme cela est notamment visible sur la figure 2, le dispositif de commande 2 comprend notamment un moteur électrique logé dans le carter 4. Le moteur électrique 6 entraine en rotation autour d'un premier axe de référence 100 un élément de transmission 8. Dans le mode de réalisation décrit, l'élément de transmission 8 est un pignon. De façon alternative, l'élément de transmission 8 peut par exemple être formé par un ensemble de poulies et d'au moins une courroie, ou encore par un système à chaîne.

Ici, le moteur électrique 6 est par exemple un moteur électrique pas à pas standard. De préférence, le moteur électrique 6 comprend une cage d'un seul tenant présentant un traitement de surface tel qu'un zingage et est dépourvu de roulement en acier, particulièrement sensibles à l'environnement naturellement humide du porte-buses 1.

Le pignon 8 est configuré pour transmettre le mouvement de rotation à un actionneur 7 du dispositif de commande 2, qui le transmet à un engrenage du porte-buses 1. Ici, le moteur électrique 6 entraine le pignon 8 en rotation autour du premier axe de référence 100 et le pignon 8 est configuré pour transmettre le mouvement de rotation à l'actionneur 7 autour d'un deuxième axe de référence 200, parallèle au premier axe de référence 100. Lorsque le porte-buses 1 est installé sur une rampe de pulvérisation, les axes de référence 100, 200 sont notamment orthogonaux à la direction longitudinale de ladite rampe.

Le dispositif de commande 2 comprend également au moins un câble d'alimentation 10. Dans le mode de réalisation décrit sur les figures 1 à 5, le dispositif de commande 2 comprend deux câbles d'alimentation 10. Ainsi, le câble d'alimentation 10 est configuré pour alimenter en énergie électrique le moteur électrique 6 et transmettre un signal de commande. Le câble d'alimentation 10 alimente le moteur électrique 6 par l'intermédiaire d'une carte électronique 12, également logée dans le carter 4. La carte électronique 12 est configurée pour transmettre au moins une consigne prédéterminée au moteur électrique 6 et au pignon 8.

Le dispositif de commande 2 comprend également un capteur d'orientation 14 relié à la carte électronique 12. Le capteur d'orientation 14 est configuré pour déterminer une orientation angulaire du pignon 8.

Il est alors possible grâce au dispositif de commande 2 d'associer chaque consigne ou commande prédéterminée à une orientation angulaire donnée du pignon 8, c'est-à-dire à une orientation angulaire donnée de l'actionneur 7 du dispositif de commande 2, qui le transmet à un engrenage du porte-buses 1, de sorte à rendre active une ou plusieurs buses de pulvérisation données du porte-buses. Grâce à une telle combinaison de caractéristiques, un contrôle précis et automatique du porte-buses 1 est réalisé, permettant finalement une sélection automatique des buses de pulvérisation, par exemple pour pulvériser avec un dosage différent, voire pour pulvériser un premier produit phytosanitaire donné à l'aide de l'une des buses du porte-buses 1 et un deuxième produit phytosanitaire donné à l'aide d'une autre des buses du porte-buses 1. De la même manière, un tel dispositif de commande 2 peut permettre de modifier le débit d'un pulvérisateur par exemple en modifiant la buse active. Ainsi, un opérateur d'un pulvérisateur, par exemple porté par un engin agricole, peut modifier la commande d'un porte-buses 1 sans descendre dudit engin agricole, ou changer de buse active en fonction de la vitesse de l'engin agricole. Il en résulte un gain de temps significatif et une amélioration de la sécurité de l'opérateur. Un tel dispositif de commande 2 muni d'un tel capteur d'orientation 14 permet d'obtenir un retour sur la buse active, permettant de signaler tout dysfonctionnement, par exemple un blocage mécanique du dispositif ou du mécanisme du porte-buses et ainsi interdire la pulvérisation s'il y a lieu.

Comme illustré particulièrement sur la figure 2, le carter 4 comprend deux étages 16,18, notamment un premier étage 18 et un deuxième étage 16, s'étendant au-dessus du premier étage 18. Dans cette configuration, le premier étage 18 loge notamment le pignon 8, l'actionneur 7 du dispositif de commande 2 et les câbles d'alimentation 10. Le deuxième étage 16 loge quant à lui le moteur électrique 6, le capteur d'orientation 14 et la carte électronique 12. De préférence, les deux étages 16, 18 sont séparés par une plaque intermédiaire, qui peut recevoir dans ce mode de réalisation la carte électronique 12 ainsi que des éléments de guidage du pignon 8. Dans une telle configuration, les composants électroniques et électriques sont séparés des composants mécaniques. En outre, une telle configuration contribue aussi à disposer le dispositif au-dessus du porte-buses 1 par rapport au sol. Lorsque le carter 4 comprend deux étages, 16,18 les deux étages 16, 18 peuvent être formés à partir de deux pièces distinctes rendues solidaires.

De façon avantageuse, le carter 4 comprend, au niveau du premier étage 18 et au niveau de la liaison entre le carter 4 et l'actionneur 7, une gorge en saillie autour de l'actionneur 7. Une telle gorge présente une forme, par exemple une chicane axiale, complémentaire avec celle de l'actionneur 7, comme cela est particulièrement visible sur la figure 2. Une telle complémentarité de forme permet de retenir un élément lubrifiant, tel que de la graisse, permettant d'obtenir une étanchéité supplémentaire entre le dispositif de commande 2 et l'actionneur 7.

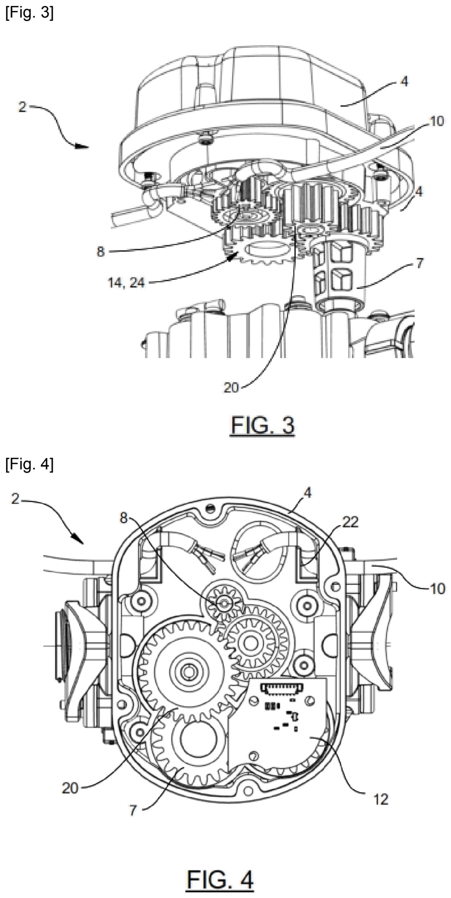

Le dispositif de commande 2 peut avantageusement comprendre un réducteur 20, comme illustré sur la figure 3 et sur la figure 4, ou une partie du carter 4 correspondant au premier étage 18, respectivement au deuxième étage 16 n'est pas représentée. Le réducteur 20 peut avantageusement être agencé sur deux niveaux verticaux, chaque élément denté du réducteur 20 comprenant alors un nombre de dents différents à chaque extrémité. Dans le cas où l'élément de transmission 8 est formé par un ensemble de poulies et une courroie, le réducteur peut également être formé par un ensemble de poulies et de courroies.

Le câble d'alimentation 10 s'étend au travers d'une paroi du carter 4 de sorte qu'une première partie du câble d'alimentation s'étende à l'intérieur du carter 4 et une deuxième partie du câble d'alimentation 10 s'étende à l'extérieur du carter 4 comme illustré sur la figure 4. Les deux parties du câble 10 sont délimitées par un organe d'étanchéité 22 du carter 4. Dans le mode de réalisation décrit, l'organe d'étanchéité est formé par une résine (non illustrée) agencée dans une chicane 22 du carter 4. Ainsi, la première partie du câble d'alimentation 10 s'étend à travers la chicane 22. Naturellement ici, il y a une chicane 22 par câble d'alimentation 10. Dans une telle configuration, une étanchéité est ainsi obtenue, permettant de préserver les composants mécaniques et électroniques du dispositif.

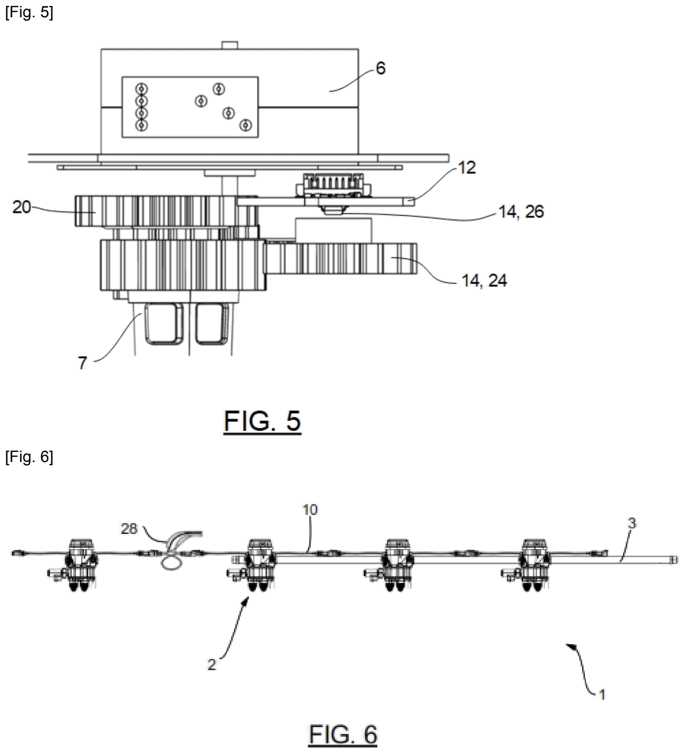

La figure 5 illustre une réalisation particulière du capteur d'orientation 14. Le capteur d'orientation 14 est disposé sous la carte électronique 12, en regard d'une roue dentée 24 en engrènement avec le pignon 8. La roue dentée 24 comprend une cible logée sur la roue dentée 24. La cible est configurée pour être détectée par le capteur d'orientation 14. Dans une telle configuration, une lecture de l'orientation angulaire de la roue dentée 24 par détection de la cible, par exemple un aimant, permet de déterminer avec précision une orientation angulaire correspondante du pignon 8. D'autres réalisations du capteur 14 sont envisageables.

Selon un autre aspect de l'invention, celle-ci a trait à un système comprenant une pluralité de dispositifs de commande 2 tels que décrits ci-dessus et comme illustré sur la figure 6. La pluralité de dispositifs de commande et la pluralité de porte-buses 1 sont montés sur une rampe de pulvérisation 3. Chaque dispositif de commande 2 est relié à au moins un autre dispositif de commande 2 par l'intermédiaire de leurs câbles d'alimentation 10 se joignant pour former des nœuds. Ainsi, l'énergie électrique circule de dispositif adjacent en dispositif adjacent. Ce montage est couramment désigné comme étant « en série ». Les cartes électroniques 12 des dispositifs de commande 2 et les nœuds sont configurés pour former un réseau de communication, notamment un réseau de communication CAN du système. Le système ainsi formé est configuré pour commander une pluralité de porte-buses 1 d'un pulvérisateur agricole.

Une même consigne prédéterminée peut être adressée à chaque dispositif de commande 2. Cette consigne peut également être décalée temporellement, par exemple de la durée nécessaire pour rendre active une buse de pulvérisation donnée, durée qui est de l'ordre de 0,3 secondes, pour permettre de réduire sensiblement la puissance instantanée nécessaire pour l'ensemble du système. Par exemple, une configuration où les dispositifs de commande 2 dont une adresse est paire peuvent être commandés simultanément et les dispositifs de commande 2 dont une adresse est impaire peuvent être commandés simultanément avec un décalage temporel. On divise ainsi par deux la puissance instantanée nécessaire. Une configuration en séquentiel est également envisageable, en fonction du site à pulvériser. En réduisant la puissance instantanée maximale nécessaire, on s'assure d'éviter de surcharger des composants de l'engin agricole fournissant la puissance, par exemple son alternateur.

Afin d'éviter des pertes de puissance dû au montage en série, le système peut comprendre des raccords 28, configuré pour ajuster l'énergie électrique circulant dans le système. Ce montage est couramment désigné comme étant en « T ». Naturellement, d'autres montages sont possibles en fonction des dimensions du pulvérisateur agricole. A titre d'exemple, un raccord 28 peut être disposé tous les six porte-buses 1. Un tel raccord permet également de réduire la section des câbles d'alimentation, puisque l'intensité est réajustée sur la ligne du système.

De préférence, l'assemblage du dispositif de commande 2 sur un porte-buses 1 et le montage sur la rampe de pulvérisation 3 sont réalisés de façon concomitante. Autrement dit, le dispositif de commande 2 comprend des dispositifs de fixation configurés pour l'encliqueter sur la rampe de pulvérisation 3 et permettant de le solidariser au corps du porte-buses 1. De tels dispositifs de fixation permettent un démontage rapide et sans outil du dispositif de commande 2, et permettent d'obtenir un centrage idéal de l'actionneur 7 du dispositif de commande 2 par rapport au porte-buses 1.

En outre, les dispositifs de commande 2 sont montés sur la rampe de pulvérisation 3, verticalement au-dessus de ladite rampe, de sorte que ladite rampe de pulvérisation s'étende au-dessus du corps du porte-buses 1. Une telle configuration permet d'améliorer sensiblement l'encombrement entre deux porte-buses adjacents, et permet également d'éloigner au maximum les éléments mécaniques et électroniques des buses de pulvérisation de sorte à les préserver de l'humidité.

On notera par ailleurs que l'invention n'est pas limitée aux modes de réalisations décrits précédemment. Il apparaîtra en effet à la personne du métier que diverses modifications peuvent être apportées aux modes de réalisations décrits ci-dessus, à la lumière de l'enseignement qui vient de lui être divulgué.

Dans la présentation détaillée de l'invention qui est faite précédemment, les termes utilisés ne doivent pas être interprétés comme limitant l'invention au mode de réalisation exposé dans la présente description, mais doivent être interprétés pour y inclure tous les équivalents dont la prévision est à la portée de la personne du métier en appliquant ses connaissances générales à la mise en œuvre de l'enseignement qui vient de lui être divulgué.

## Revendications

1. Dispositif de commande (2) pour commander au moins un porte-buses (1) d'un pulvérisateur agricole, le dispositif comprenant :
- un moteur (6) électrique logé dans un carter (4) du dispositif de commande (2), le moteur (6) électrique entrainant en rotation autour d'un premier axe de référence (100) un élément de transmission (8) configuré pour transmettre le mouvement de rotation à un actionneur (7) du porte-buses (1) ;
- au moins un câble d'alimentation (10) configuré pour alimenter en énergie électrique le moteur (6) par l'intermédiaire d'une carte électronique (12) du dispositif de commande (2), la carte électronique (12) étant logée dans le carter (4) ;
- un capteur d'orientation (14) relié à la carte électronique (12), le capteur d'orientation (14) étant configuré pour déterminer une orientation angulaire de l'élément de transmission (8) du moteur (6) ;
le dispositif étant configuré pour commander la rotation de l'actionneur (7) du porte-buses (1) par l'intermédiaire d'au moins une commande prédéterminée de sorte à rendre active au moins une buse de pulvérisation donnée du porte-buses (1), chaque commande prédéterminée étant associée à une orientation angulaire donnée de l'élément de transmission (8) du moteur (6) électrique.

2. Dispositif de commande (2) selon la revendication 1, dans lequel l'élément de transmission (8) est configuré pour transmettre le mouvement de rotation à l'actionneur (7) autour d'un deuxième axe de référence (200), parallèle au premier axe de référence (100).

3. Dispositif de commande (2) selon la revendication 2, dans lequel le carter (4) comprend un premier étage (18) et un deuxième étage (16) superposés, l'élément de transmission (8) et le capteur d'orientation (14) étant logé dans le premier étage (18) du carter (4) et le moteur (6) électrique et la carte électronique (12) étant logés dans le deuxième étage (16), le deuxième étage (16) s'étendant au-dessus du premier étage (18).

4. Dispositif de commande (2) selon la revendication 3, dans lequel le carter (4) comprend, au premier étage (18), au niveau de la liaison entre le carter (4) et l'actionneur (7), une gorge en saillie autour de l'actionneur (7), ladite gorge présentant une forme, par exemple une chicane axiale, complémentaire avec celle de l'actionneur (7).

5. Dispositif de commande (2) selon l'une quelconque des revendications précédentes, comprenant un réducteur (20) logé dans le carter (4), le réducteur (20) étant disposé entre l'élément de transmission (8) du moteur (6) électrique et l'actionneur (7) du porte-buses (1).

6. Dispositif de commande (2) selon l'une quelconque des revendications précédentes, dans lequel le câble d'alimentation (10) s'étend au travers d'une paroi du carter (4), de sorte qu'une première partie du câble d'alimentation (10) s'étende à l'intérieur du carter (4) du dispositif de commande (2) et une deuxième partie du câble d'alimentation (10) s'étende à l'extérieur du carter (4) du dispositif de commande (2), les deux parties du câble (10) étant délimitées par un organe d'étanchéité du carter (4).

7. Dispositif de commande (2) selon la revendication 6, dans lequel l'organe d'étanchéité est formé par une résine de remplissage d'une chicane aménagée en entrée du carter (4), la première partie du câble d'alimentation (10) s'étendant à travers la chicane.

8. Dispositif de commande (2) selon l'une quelconque des revendications précédentes, comprenant deux câbles d'alimentation (10), chaque câble d'alimentation (10) étant configuré pour relier la carte électronique (12) du dispositif de commande (2) à un dispositif de commande (2) adjacent.

9. Dispositif de commande (2) selon l'une quelconque des revendications précédentes, dans lequel le moteur (6) électrique est un moteur (6) électrique pas à pas.

10. Dispositif de commande (2) selon l'une quelconque des revendications précédentes, dans lequel le capteur d'orientation (14) est disposé en regard d'une roue dentée (24) en engrènement avec l'élément de transmission (8), une cible étant disposée sur la roue dentée, ladite cible étant configurée pour être détectée par le capteur d'orientation (14).

11. Dispositif de commande selon l'une quelconque des revendications précédentes, dans lequel le dispositif de commande (2) comprend des dispositifs de fixation configurés pour encliqueter ledit dispositif de commande (2) sur une rampe de pulvérisation (3) et pour solidariser le porte-buses (1).

12. Système (5) de commande comprenant une pluralité de dispositifs de commande (2) selon l'une quelconque des revendications précédentes, chaque dispositif de commande (2) étant relié à au moins un autre dispositif de commande (2) par l'intermédiaire de leurs câbles d'alimentation (10) se joignant pour former des nœuds, les cartes électroniques (14) des dispositifs de commande (2) et les nœuds étant configurés pour former un réseau de communication, de préférence un réseau de communication CAN du système (5), le système (5) de commande étant configuré pour commander une pluralité de porte-buses (1) d'un pulvérisateur agricole.

13. Pulvérisateur agricole comprenant un système (5) de commande selon la revendication précédente et une rampe de pulvérisation (3), et dans lequel les dispositifs de commande (2) sont montés sur la rampe de pulvérisation (3), verticalement au-dessus de ladite rampe de pulvérisation (3).
